# DEMANDE DE BREVET EUROPEEN

(11) **EP 3 995 600 A1**
(43) Date de publication de la demande: **11.05.2022**
(21) Numéro de dépôt: 20206523.1
(22) Date de dépôt: 09.11.2020
(51) Int. Cl.: C22C 38/44, C21D 6/02, C22C 38/42, C22C 38/48, C22C 38/50, C22C 38/58, C22C 38/00, C22C 38/02, C21D 6/00

(54) **ACIER INOXYDABLE DUR PARAMAGNETIQUE ET SON PROCEDE DE FABRICATION**

(71) Demandeur: The Swatch Group Research and Development Ltd, 2074 Marin (CH)
(72) Inventeur: PORRET, Joël, Marin-Epagnier 2074 (CH)
(74) Mandataire: ICB SA

(57) **Abrégé**

La présente invention se rapporte à un acier inoxydable paramagnétique avec une composition chimique comprenant en poids :
- 20 ≤ Cr ≤ 40%,
- 3 ≤ Ni ≤ 20%,
- 0 ≤ Mn ≤ 15%,
- 0 ≤ Al ≤ 5%,
- 3 < Mo ≤ 15%,
- 0 ≤ W ≤ 5%,
- 0 ≤ Cu ≤ 2%,
- 0 ≤ Si ≤ 5%,
- 0 ≤ Ti ≤ 1%,
- 0 ≤ Nb ≤ 1%,
- 0 ≤ C ≤ 0.1%,
- 0 ≤ N ≤ 0.5%,
- 0 ≤ S ≤ 0.5%,
- 0 ≤ P ≤ 0.1%,
le solde étant constitué par du fer et des impuretés éventuelles ayant chacune une teneur inférieure ou égale à 0.5%,
ledit acier ayant une dureté comprise entre 575 et 900 HV10.

Elle se rapporte également à une pièce notamment un composant horloger réalisé dans cet acier et au procédé de fabrication de la pièce.

## Description

### Domaine de l'invention

L'invention concerne un acier inoxydable paramagnétique ayant une dureté supérieure ou égale à 575 HV et la pièce notamment un composant horloger réalisé dans cet acier. Elle concerne également le procédé de fabrication de cette pièce en acier inoxydable.

### Arrière-plan de l'invention

Les alliages métalliques durs et non ferromagnétiques trouvent des applications dans de nombreux domaines, principalement pour des composants soumis à de fortes contraintes mécaniques et/ou tribologiques et devant rester insensibles aux champs magnétiques. C'est notamment le cas pour de nombreux composants horlogers, comme par exemple des roues, des pignons, des axes ou encore des ressorts au niveau du mouvement. Pour l'habillage externe, il est également intéressant d'obtenir des duretés élevées, par exemple pour la carrure, la lunette, le fond ou encore la couronne. En effet, une dureté élevée permet généralement d'obtenir une meilleure résistance à la rayure et à l'usure et donc une bonne durabilité de ces composants exposés à l'environnement extérieur.

En métallurgie, différents mécanismes permettent de durcir les alliages en fonction de leurs compositions chimiques et de leurs histoires thermomécaniques. On connait ainsi le durcissement par solution solide, le durcissement structural, l'écrouissage, la transformation martensitique dans les aciers, la décomposition spinodale, ou encore le durcissement par diminution de la taille de grain (Hall Petch). Dans les alliages les plus remarquables, plusieurs de ces mécanismes de durcissement sont mis à profit simultanément. Toutefois, les alliages non ferromagnétiques qui présentent des duretés supérieures à 500 HV sont rares. De plus, pour atteindre un tel niveau de dureté, les alliages non ferromagnétiques cristallins nécessitent généralement un fort degré d'écrouissage, avant un éventuel traitement thermique visant à obtenir la dureté maximale par précipitation de secondes phases. C'est le cas par exemple des aciers inoxydables austénitiques, uniquement durcissables par écrouissage, ou encore de quelques superalliages austénitiques, durcissables par écrouissage suivi d'un traitement thermique de précipitation. En pratique, la fabrication de composants dans ces alliages à l'état écroui est difficile. Tout d'abord, en cas de mise en forme par forgeage, l'obtention du bon degré d'écrouissage pour obtenir la dureté requise n'est pas triviale, spécialement pour des pièces à la géométrie complexe. Comme alternative, on peut faire de l'usinage dans des semi-produits présentant un degré écrouissage défini et homogène, mais il n'est pas toujours évident de se procurer les bons formats de matière avec le degré d'écrouissage requis. De plus, les éventuelles opérations d'usinage sont très difficiles et coûteuses, car l'alliage est déjà à l'état durci, du moins partiellement. Finalement, si le procédé utilisé n'implique pas de déformation plastique, comme certains procédés de métallurgie des poudres ou de fabrication additive, il n'est simplement pas possible de durcir ces alliages. Comme alternative, il serait possible de fabriquer des alliages ayant intrinsèquement une dureté supérieure à 500 HV, comme certains alliages à haute entropie ou certains intermétalliques par exemple, mais ils seraient à nouveau très difficiles à usiner et quasi impossibles à déformer, de par leurs duretés très élevées et leurs très faibles ductilités. On comprend ainsi l'intérêt de trouver un alliage durcissable par traitement thermique sans nécessité d'un écrouissage préalable, tout en étant non ferromagnétique à l'état durci. La mise en forme se ferait ainsi à l'état mou et ductile, et un traitement thermique de durcissement serait effectué une fois la pièce terminée. C'est ce qui explique notamment l'énorme succès des aciers au carbone et des aciers inoxydables martensitiques, mais ces derniers sont malheureusement ferromagnétiques.

Pour obtenir des duretés supérieures à 500 HV dans les alliages non ferromagnétiques, d'autres solutions sont aujourd'hui largement utilisées. Différents procédés de durcissement de surface sont notamment appliqués sur les aciers inoxydables austénitiques ou les alliages de titane par exemple, après mise en forme des pièces. Toutefois, l'épaisseur de la couche durcie est généralement très faible, de l'ordre de quelques dizaines de micromètres, et l'aspect de surface est généralement modifié par le traitement. Pour des composants horlogers, Il faut donc retravailler les pièces après durcissement pour obtenir une surface propre et généralement polie. Toutefois, ces opérations de terminaison éliminent tout ou partie de la couche durcie et cette solution est donc peu utilisée en pratique, d'autant plus que les traitements de durcissement de surface sont généralement coûteux.

A nouveau, on comprend donc le besoin de trouver un alliage non ferromagnétique et durcissable par traitement thermique pour atteindre une dureté supérieure à 500 HV.

### Résumé de l'invention

La présente invention a pour objet de pallier aux inconvénients précités en proposant une composition d'acier inoxydable optimisée pour remplir les critères suivants :
- avoir un comportement paramagnétique,
- avoir une dureté supérieure à 500 HV, et plus particulièrement supérieure ou égale à 575 HV, et ce par traitement thermique sans écrouissage préalable requis lors du procédé de fabrication,
- avoir une très bonne résistance à la corrosion.

La pièce réalisée dans cet acier doit par ailleurs avoir un bel aspect esthétique, particulièrement après polissage.

A cette fin, l'acier inoxydable selon l'invention a la composition suivante en poids:
- 20 ≤ Cr ≤ 40%,
- 3 ≤ Ni ≤ 20%,
- 0 ≤ Mn ≤ 15%,
- 0 ≤ Al ≤ 5%,
- 3 < Mo ≤ 15%,
- 0 ≤ W ≤ 5%,
- 0 ≤ Cu ≤ 2%,
- 0 ≤ Si≤ 5%,
- 0 ≤ Ti ≤ 1%,
- 0 ≤ Nb ≤ 1%,
- 0 ≤ C ≤ 0.1%,
- 0 ≤ N ≤ 0.5%,
- 0 ≤ S ≤ 0.5%,
- 0 ≤ P ≤ 0.1%,
le solde étant constitué par du fer et des impuretés éventuelles ayant chacune une teneur inférieure ou égale à 0.5%.

Selon l'invention, le procédé de fabrication d'une pièce en acier inoxydable consiste à réaliser un premier traitement thermique ou thermomécanique sur une matière de base de la composition précitée dans le domaine ferritique ou ferritique-austénitique et à tremper ensuite la matière afin de conserver à température ambiante la structure ferritique ou ferritique-austénitique. Cette microstructure ferritique ou ferritique-austénitique est molle et donc ductile, ce qui permet une mise en forme aisée le cas échéant. Ensuite, après une éventuelle mise en forme, un traitement de durcissement est réalisé afin de transformer la ferrite en une phase austénitique et en une phase intermétallique sigma.

L'originalité de la présente invention provient, d'une part, de l'utilisation de la phase sigma comme source de durcissement et, d'autre part, de la teneur en molybdène supérieure à 3% dans la composition. En effet, la phase sigma a toujours été considérée comme néfaste et donc non désirée dans les aciers inoxydables. Comme la phase sigma est riche en chrome et qu'elle se forme généralement aux joints de grain, elle diminue de façon drastique la résistance à la corrosion en réduisant la concentration en chrome des autres phases présentes dans l'alliage. Ensuite, elle fragilise très rapidement et fortement les aciers inoxydables, même en très faible quantité. En effet, cette phase possédant une structure tétragonale complexe, elle est intrinsèquement très fragile et sa présence aux joints de grain crée un chemin privilégié pour la propagation des fissures. Elle n'a donc jamais été mise à profit dans les aciers inoxydables, malgré ses deux propriétés particulièrement intéressantes qui sont sa dureté comprise entre 900 et 1100 HV10 et son caractère paramagnétique. Selon l'invention, la composition de l'acier inoxydable et le procédé sont optimisés afin d'obtenir une fine répartition aussi bien de la phase sigma que de la phase austénitique sans formation privilégiée de la phase sigma aux joints de grain. Cette microstructure particulière constituée de deux phases non ferromagnétiques permet notamment d'obtenir un très bon compromis entre dureté et ténacité, une bonne résistance à la corrosion ainsi qu'une excellente polissabilité.

En outre, la teneur en Mo (molybdène) supérieure à 3% permet d'améliorer la résistance à la corrosion. En effet, une haute teneur en Mo permet d'obtenir une concentration significative en Mo dans l'austénite (> 1%), même si le Mo est toujours présent en plus grande concentration dans la phase sigma. En renforçant la résistance à la corrosion de l'austénite grâce à la présence du Mo, on améliore de manière globale la résistance à la corrosion de l'alliage, et plus spécifiquement la résistance à la corrosion par piqûres. Un deuxième avantage d'une concentration en Mo supérieure à 3% est que cela permet de réaliser le traitement thermique de durcissement dans le domaine γ+σ à plus haute température, ce qui augmente d'autant plus la concentration en Cr (chrome) et en Mo dans l'austénite, améliorant par là-même encore la résistance à la corrosion. En outre, réaliser le traitement thermique à plus haute température réduit le risque de former des carbures ou des nitrures néfastes pour la résistance à la corrosion. En effet, plus la température est élevée, plus la solubilité du carbone et de l'azote dans l'austénite est grande.

D'autres caractéristiques et avantages de la présente invention apparaîtront à la lecture de la description détaillée ci-dessous faisant référence aux figures suivantes.

### Brève description des figures

Les diagrammes des figures 1-5 ont été générés avec le logiciel de calcul thermodynamique Thermocalc (base de données TCFE10).
La figure 1 représente un diagramme de phase d'un alliage Fe-(32.5-x)%Cr-7%Ni-x%Mo (% massique) illustrant l'effet du Mo sur le domaine phase Sigma + CFC (austénite).
La figure 2 représente l'effet de la température du traitement thermique de durcissement sur le PREN de l'austénite pour un alliage Fe-28.5%Cr-7%Ni-4%Mo (% massique).
La figure 3 représente un diagramme de phase d'un alliage Fe-(29.5-x)%Cr-7%Ni-3%Mo-x%C (% massique) selon l'art antérieur, illustrant l'effet de la température sur la solubilité du carbone dans la phase austénitique.
La figure 4 représente un diagramme de phase d'un alliage Fe-(27.5-x)%Cr-7%Ni-5%Mo-x%C (% massique) selon l'invention, illustrant l'effet de la température sur la solubilité du carbone dans la phase austénitique.
La figure 5 représente un diagramme de phase d'un alliage Fe-(27.5-x)%Cr-7%Ni-5%Mo-x%N (% massique) selon l'invention, illustrant l'effet de la température sur la solubilité de l'azote dans la phase austénitique.
La figure 6 représente une image obtenue par microscopie optique d'un acier Fe-29.5%Cr-7%Ni-3.5%Mo (% massique) selon l'invention.
La figure 7 représente la courbe de courant en fonction du potentiel dans un essai de polarisation potentiodynamique pour un acier Fe-28.5%Cr-7%Ni-4%Mo (% massique) selon l'invention pour trois températures différentes de traitement thermique de durcissement en comparaison avec un acier inoxydable austénitique DIN 1.4435 selon l'art antérieur.

### Description de l'invention

L'invention concerne des aciers inoxydables paramagnétiques ayant une dureté comprise entre 575 et 900 HV10, de préférence entre 650 et 900 HV10, plus préférentiellement entre 675 et 900 HV10. On entend par dureté HV10 une dureté Vickers mesurée selon la norme ISO 6507-1:2018. L'invention concerne également une pièce et plus précisément un composant horloger réalisé avec cet acier. Il peut s'agir d'un composant d'habillage choisi parmi la liste non exhaustive comprenant une carrure, un fond, une lunette, une couronne, un poussoir, un maillon de bracelet, un bracelet, une boucle ardillon, un cadran, une aiguille et un index de cadran. Il peut également s'agir d'un composant du mouvement choisi parmi la liste non exhaustive comprenant une roue dentée, un axe, un pignon, un ressort, un pont, une platine, une vis et un balancier. La présente invention se rapporte également au procédé de fabrication de la pièce en acier inoxydable selon l'invention.

Les aciers inoxydables selon l'invention ont la composition suivante en poids :
- 20 ≤ Cr ≤ 40%,
- 3 ≤ Ni ≤ 20%,
- 0 ≤ Mn ≤ 15%,
- 0 ≤ AL ≤ 5%,
- 3 < Mo ≤ 15%,
- 0 ≤ W ≤ 5%,
- 0 ≤ Cu ≤ 2%,
- 0 ≤ Si≤ 5%,
- 0 ≤ Ti ≤ 1%,
- 0 ≤ Nb≤ 1%,
- 0 ≤ C ≤ 0.1%,
- 0 ≤ N ≤ 0.5%,
- 0 ≤ S ≤ 0.5%,
- 0 ≤ P ≤ 0.1%,
le solde étant constitué par du fer et des impuretés éventuelles ayant chacune une teneur inférieure ou égale à 0.5%,

De préférence, ils ont la composition suivante en poids :
- 25 ≤ Cr ≤ 35%,
- 5 ≤ Ni ≤ 10%,
- 0 ≤ Mn ≤ 3%,
- 0 ≤ AL ≤ 3%,
- 3 < Mo ≤ 10%,
- 0 ≤ W ≤ 5%,
- 0 ≤ Cu ≤ 2%,
- 0 ≤ Si ≤ 3%,
- 0 ≤ Ti ≤ 1%,
- 0 ≤ Nb ≤ 1%,
- 0 ≤ C ≤ 0.1%,
- 0 ≤ N ≤ 0.5%,
- 0 ≤ S ≤ 0.5%,
- 0 ≤ P ≤ 0.1%,
avec toujours ce même solde en fer et impuretés éventuelles.

De préférence, le pourcentage en poids de Mo pour une des gammes de compositions mentionnées plus haut est compris entre 3.5 et 15% ou entre 3.5 et 10%. Plus préférentiellement, il est compris entre 3.5 et 6% ou entre 4 et 6%.

Avantageusement, le pourcentage en poids de W pour une des gammes de compositions ci-haut est compris entre 0.2 et 5% et plus avantageusement entre 0.5 et 5%.

La teneur en Mo supérieure à 3% massique permet d'augmenter la concentration en Mo dans la phase austénitique avec pour corollaire une augmentation de la résistance globale de l'acier à la corrosion.

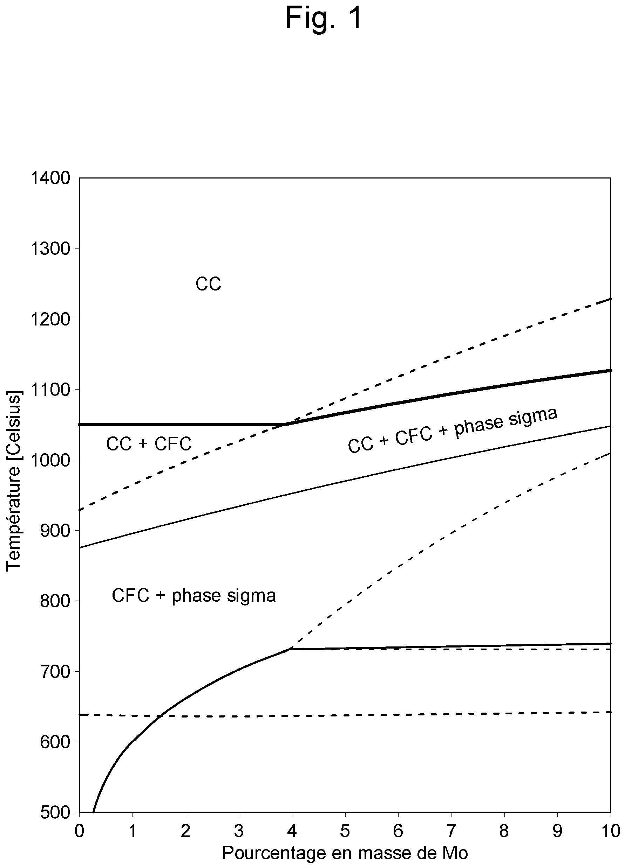

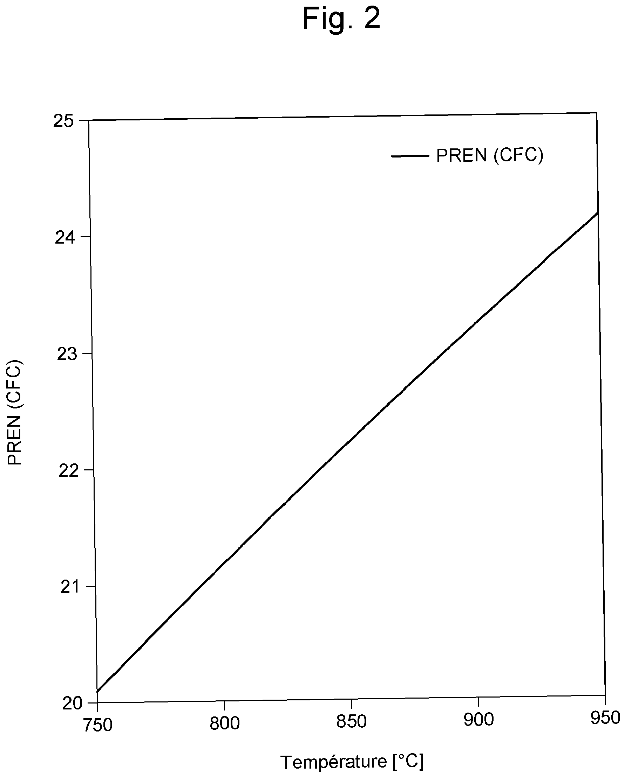

Par ailleurs, l'augmentation de la concentration en Mo permet surtout d'effectuer le traitement thermique de durcissement (dans le domaine sigma + CFC) à plus haute température comme illustré à la figure 1. Ainsi, pour 4% Mo, le traitement thermique peut être réalisé jusqu'à 950°C et pour 5% Mo, il peut être réalisé jusqu'à 975°C. Réaliser le traitement thermique de durcissement dans le domaine sigma + CFC à plus haute température augmente d'autant plus la concentration en Cr et en Mo dans l'austénite, améliorant par là-même encore la résistance à la corrosion. L'effet de la température de traitement sur le PREN (*Pitting Resistance Equivalent Number* basé sur la teneur en Cr, Mo et N tel que PREN = %Cr + 3.3 x %Mo + 16 x %N) de l'austénite est illustré à la figure 2.

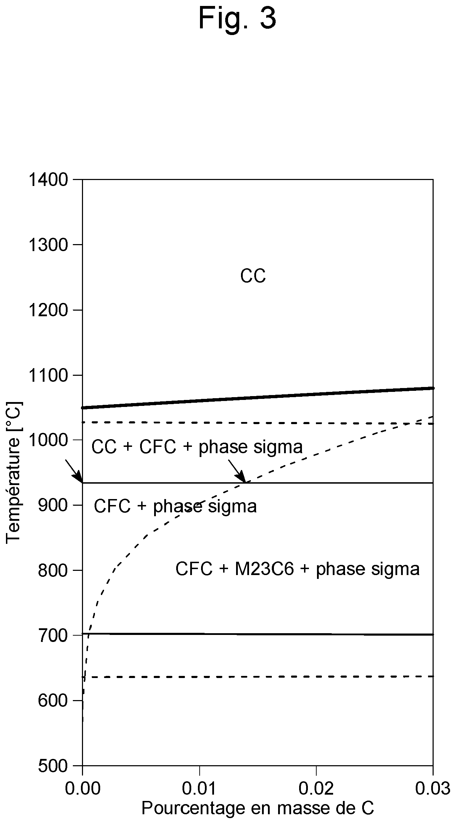

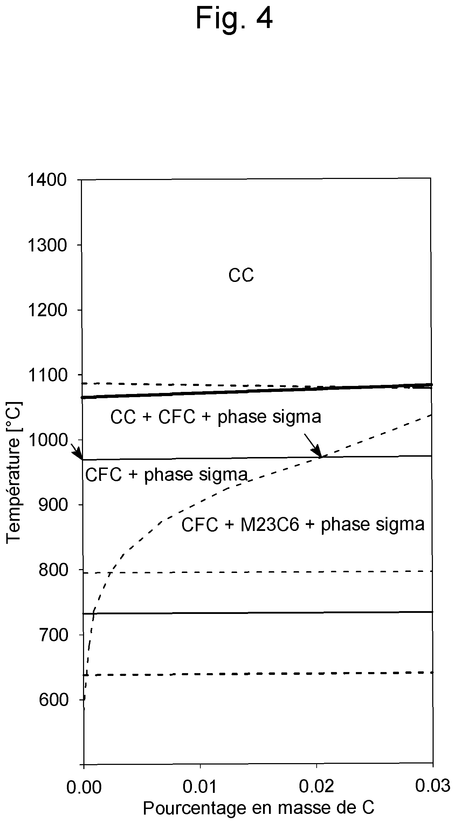

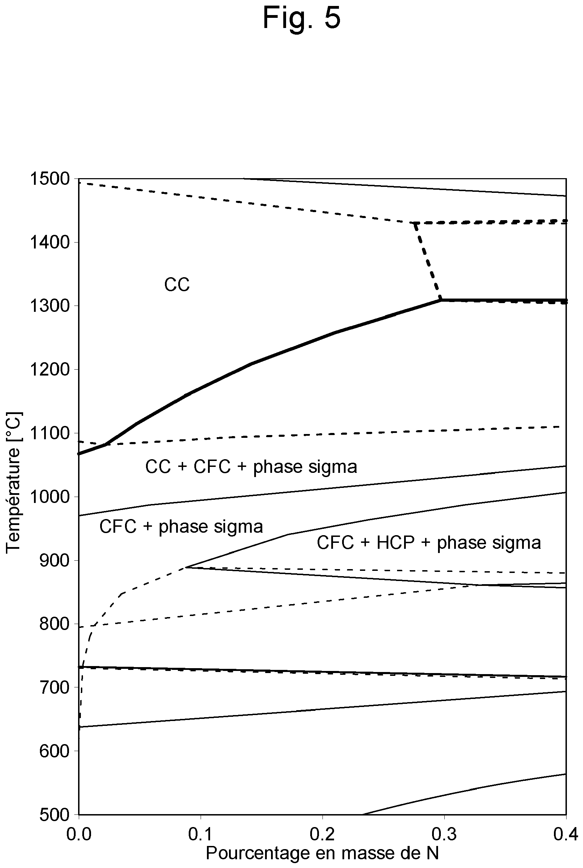

En outre, réaliser le traitement thermique à plus haute température réduit le risque de former des carbures ou des nitrures néfastes pour la résistance à la corrosion. En effet, plus la température est élevée, plus la solubilité du carbone et de l'azote dans l'austénite est grande. Cet effet est illustré pour le carbone à l'aide des diagrammes de phase des figures 3 et 4 pour respectivement un alliage Fe-(29.5-x)%Cr-7%Ni-3%Mo-x%C selon l'art antérieur et un alliage Fe-(27.5-x)%Cr-7%Ni-5%Mo-x%C selon l'invention. En augmentant la concentration en Mo au-delà de 3% de manière à pouvoir réaliser le traitement thermique de durcissement dans la gamme de températures 925-1000°C, il est possible d'utiliser des alliages de moindre pureté au niveau des éléments interstitiels comme le carbone et l'azote et donc de réduire drastiquement le coût de l'alliage. Ainsi, avec 3% de molybdène pour l'alliage Fe-(29.5-x)%Cr-7%Ni-3%Mo-x%C de la figure 3, le domaine γ+σ est stable jusqu'à 925°C maximum, la concentration maximale en carbone pour éviter toute précipitation de carbures (phase M23C6 sur la figure 3) est légèrement supérieure à 0.01% à cette température (voir flèches dans le diagramme). Par contre, avec 5% de molybdène pour l'alliage Fe-(27.5-x)%Cr-7%Ni-5%Mo-x%C de la figure 4, l'absence de carbures (phase M23C6 sur la figure 4) est garantie jusqu'à une concentration massique maximale en carbone de presque 0.02% à une température de 975°C qui est toujours dans le domaine γ+σ (CFC + Sigma). Cette petite différence de 50°C lors du traitement thermique de durcissement, possible grâce à la concentration plus élevée en Mo, engendre une différence de solubilité du carbone dans l'austénite d'un facteur 2. L'effet de la température est similaire pour l'azote comme montré à la figure 5 pour un alliage Fe-(27.5-x)%Cr-7%Ni-5%Mo-x%N. En effet, la concentration maximale en azote pour éviter toute formation de nitrures (phase HCP sur la figure 5) augmente fortement avec la température, passant de 0.15% massique à 925°C à environ 0.3% massique à 975°C.

La pièce en acier inoxydable selon l'invention est réalisée avec le procédé de fabrication décrit plus en détail ci-après. Selon l'invention, le procédé de fabrication d'une pièce en acier inoxydable comporte une étape a) de mise à disposition ou réalisation d'une ébauche ayant une composition tombant dans les gammes précitées. Cette ébauche présente une structure majoritairement ferritique ou, de préférence, 100% ferritique. L'ébauche est obtenue à partir d'une matière de base soumise à un traitement thermique ou thermomécanique à une température comprise dans la gamme 1000°C-1500°C suivi d'une trempe. La matière de base peut être sous forme d'une poudre ou d'une matière consolidée. Elle peut être réalisée par coulée, par pressage, par moulage par injection (*MIM: Metal Injection Moulding*), par fabrication additive, et de manière plus large par métallurgie des poudres. Il est envisageable de réaliser la matière de base et le traitement thermique en une seule étape, par exemple, par une technique de fabrication additive avec laser (*SLM : Selective Laser Melting*)*.* Ces différentes techniques permettent de réaliser une ébauche avec une matière de base présentant des dimensions sensiblement égales à celles de la pièce à réaliser, auquel cas une étape de mise en forme ultérieure n'est pas requise.

La composition de la matière de base est optimisée pour obtenir une structure majoritairement ou complètement ferritique lors du maintien à la température comprise entre 1000°C et 1500°C pendant un temps compris entre 1 minute et 24 heures. La température est choisie pour obtenir une fraction massique d'austénite inférieure ou égale à 40% et une fraction massique de ferrite supérieure ou égale à 60%. L'austénite formée lors du maintien entre 1000°C et 1500°C est dite primaire par opposition à l'austénite dite secondaire formée lors du traitement thermique ultérieure de durcissement. De préférence, la structure à l'issue du maintien entre 1000°C et 1500°C est complètement ferritique.

Le traitement thermique ou thermomécanique dans la gamme 1000°C-1500°C peut être mis à profit pour réaliser des traitements d'homogénéisation, de recristallisation ou encore de relaxation des contraintes sur des matières de base obtenues par coulée ou pour réaliser des frittages sur des matières de base sous forme de poudre. Le traitement dans le domaine ferritique ou ferritique-austénitique peut être réalisé en un seul cycle ou comporter plusieurs cycles de traitement thermique ou thermomécanique. Il peut également être précédé ou suivi d'autres traitements thermiques ou thermomécaniques.

Après le maintien dans le domaine ferritique ou ferritique-austénitique, l'ébauche est soumise à un refroidissement rapide, aussi qualifié de trempe, jusqu'à une température inférieure à 500°C de manière à éviter la formation de nouvelles phases lors du refroidissement. Ainsi, la structure ferritique ou ferritique-austénitique est conservée à température ambiante. Grâce aux compositions selon l'invention, la structure ferritique est suffisamment stable pour être conservée à température ambiante après un refroidissement rapide mais suffisamment métastable pour être facilement et rapidement transformée en phase sigma et en austénite lors d'un traitement thermique subséquent à des températures intermédiaires comprises entre 600°C et 1000°C (cf. étape c) ci-après).

A l'issue de l'étape a), l'alliage présente une faible dureté et une grande ductilité permettant le cas échéant une mise en forme aisée, par exemple par forgeage, par découpage ou par usinage.

Après l'étape a), le procédé comporte une étape b) optionnelle de mise en forme de l'ébauche par usinage, découpage ou par toute opération impliquant une déformation telle que le forgeage. Cette étape peut être réalisée en plusieurs séquences. Cette étape n'est pas requise si l'ébauche à l'issue de l'étape a) présente déjà la forme finale de la pièce à fabriquer.

Outre la mise en forme, une opération de déformation plastique peut être mise à profit pour augmenter notamment la vitesse de transformation de la ferrite lors de l'étape subséquente de transformation de la ferrite en austénite et en phase sigma. De plus, comme le durcissement par écrouissage est faible pour les structures ferritiques et que l'alliage selon l'invention est majoritairement ou totalement ferritique avant le traitement par durcissement, cette étape de déformation plastique n'engendre pas de durcissement problématique pour une mise en forme éventuelle par usinage ou découpage. Cette déformation plastique en une ou plusieurs séquences peut être réalisée à une température inférieure à 650°C.

Après l'éventuelle mise en forme, le procédé comporte une étape c) de traitement thermique de durcissement de l'ébauche en un ou plusieurs paliers entre 600°C et 1000°C pour obtenir les propriétés finales. La durée du traitement thermique entre 600°C et 1000°C est fixée de façon à garantir une transformation totale de la ferrite et donc l'obtention d'une microstructure formée d'une phase sigma et d'une phase austénitique. On entend par transformation totale une transformation à plus de 99% de la ferrite en une phase austénitique + une phase sigma. Ainsi, la structure finale pourrait contenir des traces de ferrite résiduelle avec un pourcentage inférieur à 1%. La vitesse de transformation de la ferrite en une phase austénitique + une phase sigma dépend notamment de la composition de l'alliage et de son histoire thermomécanique comme mentionné précédemment. De manière générale, la durée totale du traitement thermique en un ou plusieurs paliers se situe entre 30 minutes et 24 heures. Avantageusement, le traitement thermique est réalisé en deux paliers avec un premier palier entre 600°C et 850°C et un deuxième palier entre 850°C et 1000°C. Le premier palier à plus basse température permet d'obtenir une vitesse de transformation plus rapide et une microstructure plus fine alors que le deuxième palier à plus haute température permet de maximiser la résistance à la corrosion. Comme la transformation est totale après le premier palier, la microstructure reste fine même après le deuxième palier à plus haute température.

Après ce traitement de durcissement, l'acier présente une fraction massique de phase sigma comprise entre 40% et 80% et une fraction massique d'austénite comprise entre 20% et 60%, les pourcentages étant fonction de la composition chimique et des traitements thermiques réalisés. Comme susmentionné, l'acier peut comporter des traces de ferrite résiduelle avec un pourcentage inférieur à 1% en poids. La phase austénitique est formée d'austénite secondaire et éventuellement d'austénite primaire.

Avantageusement, l'austénite primaire et l'austénite secondaire ont une taille inférieure à 10 µm et plus avantageusement à 5 µm. On entend par taille la plus dimension de la phase dans une vue en coupe. Il peut ainsi s'agir de l'épaisseur des lamelles d'austénite lorsque l'austénite se présente sous forme de lamelles ou du diamètre lorsque l'austénite se présente sous forme globulaire. Dans ce dernier cas, lorsque l'austénite n'est pas parfaitement sphérique, la taille est relative à la plus petite dimension de la structure austénitique.

Avantageusement, la structure finale est formée d'austénite secondaire et de la phase sigma sans austénite primaire. La microstructure ainsi obtenue est une microstructure eutectoïde très fine et homogène formée de l'austénite secondaire et de la phase sigma. L'austénite secondaire présente pour caractéristique d'être plus fine que l'austénite primaire. Cette structure plus grossière de l'austénite formée avant durcissement est moins favorable pour l'obtention d'un polissage miroir. En outre, les différences de compositions entre les austénites formées respectivement avant et après le traitement de durcissement sont moins favorables du point de vue de la résistance à la corrosion.

La pièce obtenue a une dureté élevée comprise entre 575 et 900 HV10, et plus spécifiquement entre 650 et 900 HV10 grâce au traitement thermique de durcissement. Comme pour tous les aciers inoxydables, d'éventuelles inclusions non métalliques peuvent également être présentes en faible quantité, sans que cela n'affecte les propriétés mécaniques et magnétiques. De plus, des inclusions permettant d'améliorer l'usinabilité, comme par exemple des sulfures de manganèse, peuvent également être présentes en faible quantité dans l'alliage.

Cette étape de traitement thermique de durcissement peut être suivie d'une éventuelle étape d) de finition de surface telle que du polissage.

Par ailleurs, en présence d'une ébauche avec une structure austénite + ferrite à l'étape a), le procédé de fabrication peut comporter une étape additionnelle b') avant le traitement thermique de durcissement, dans la gamme de température 100°C-1500°C pour transformer la structure austénite + ferrite en une structure 100% ferritique.

En résumé, après le traitement thermique à haute température (1000°C-1500°C) suivi d'une trempe, les aciers présentent notamment les propriétés suivantes :
- Dureté entre 150 et 400 HV10.
- Bonne ductilité avec une déformation plastique sans fissuration supérieure à 50% en compression à température ambiante.
- Comportement ferromagnétique, dû à la présence de ferrite.

Après le traitement thermique de durcissement, les aciers selon l'invention présentent notamment les propriétés suivantes :
- Dureté entre 575 et 900 HV10.
- Comportement paramagnétique.
- Excellente polissabilité, grâce à la microstructure très fine.
- Très bonne résistance à l'usure.
- Bonne résistance à la corrosion.

Concernant la résistance à la corrosion, l'acier selon l'invention est particulièrement performant grâce à la concentration en molybdène supérieure à 3%, qui permet d'augmenter la résistance à la corrosion de la phase austénitique et donc de l'alliage dans sa globalité. Ces aciers sont donc particulièrement intéressants pour des composants d'habillage.

Pour finir, l'invention est illustrée à l'aide des exemples ci-après.

### Exemples

### Exemple 1

L'acier nommé Fe29Cr8Ni5Mo contient en pourcentages massiques 58% de fer, 29% de chrome, 8% de nickel et 5% de molybdène. Il a été fabriqué par fusion à l'arc à partir d'éléments de haute pureté (> 99.9%) et coulé sous forme d'un barreau. Il a ensuite été soumis à un traitement thermique d'homogénéisation à 1300°C pendant 2 heures dans une atmosphère d'argon suivi d'une trempe au gaz (env. 200K/min). Le barreau a ensuite été déformé à température ambiante par compression avec une réduction de l'épaisseur d'un facteur 2 avant d'être recuit dans le domaine ferritique à 1080°C pendant 10 minutes sous air et trempé dans l'eau. A l'état recuit, l'alliage Fe29Cr8Ni5Mo présente une dureté Vickers de 265 HV10. Ensuite, un traitement thermique de durcissement a été réalisé sur un échantillon à 850°C et sur un autre à 900°C pendant 6 heures. Une microstructure fine, homogène et biphasée comprenant la phase austénitique et la phase sigma est obtenue. Dans cet état métallurgique, l'alliage Fe29Cr8Ni5Mo présente une dureté Vickers de respectivement 705 et 675 HV10.

### Exemple 2

L'acier nommé Fe29Cr7Ni4Mo contient en pourcentages massiques 60% de fer, 29% de chrome, 7% de nickel et 4% de molybdène. Il a également été fabriqué par fusion à l'arc à partir d'éléments de haute pureté (> 99.9%), soumis à un traitement thermique d'homogénéisation à 1300°C pendant 2 heures sous argon suivi d'une trempe au gaz, déformé à température ambiante par compression avec une réduction de l'épaisseur d'un facteur 2, soumis à un traitement thermique de recuit à 1100°C sous air pendant 10 minutes suivi d'une trempe à l'eau. Après ce traitement thermique de recuit, l'alliage Fe29Cr7Ni4Mo présente une microstructure ferritique monophasée. Ensuite, un premier échantillon a été porté à 700°C pendant 4 heures et puis à 900°C pendant 3 heures sous vide. La dureté obtenue est de 670 HV10. Un deuxième échantillon a été porté à 750°C pendant 7 heures sous vide. La dureté obtenue est de 735 HV10. Dans les deux cas, une fine microstructure biphasée est obtenue.

### Exemple 3

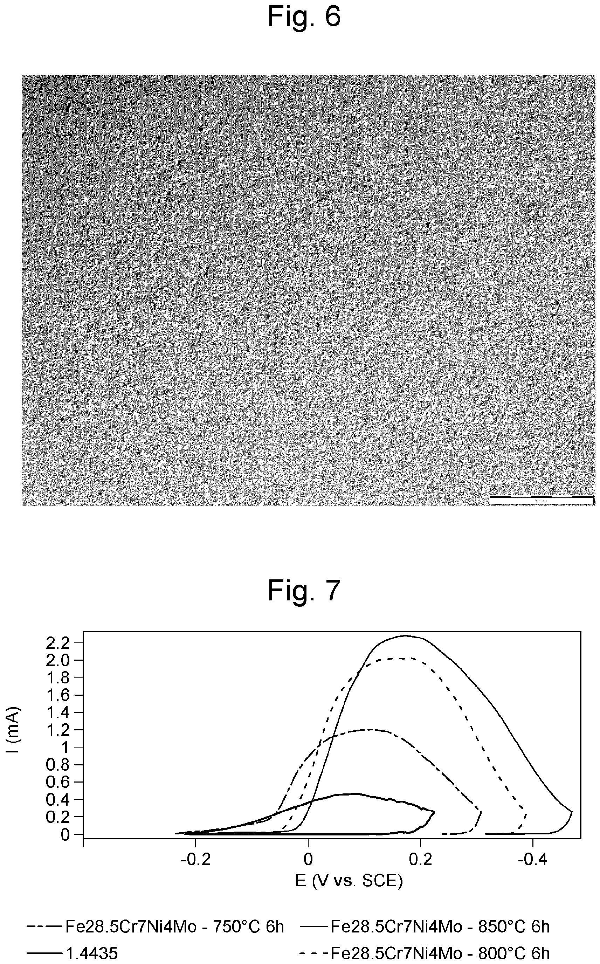

L'acier nommé Fe29.5Cr7Ni3.5Mo contient en pourcentages massiques 60% de fer, 29.5% de chrome, 7% de nickel et 3.5% de molybdène. Il a également été fabriqué par fusion à l'arc à partir d'éléments de haute pureté (> 99.9%), soumis à un traitement thermique d'homogénéisation à 1300°C pendant 2 heures sous argon suivi d'une trempe au gaz, déformé à température ambiante par compression avec une réduction de l'épaisseur d'un facteur 2, soumis à un traitement thermique de recuit à 1100°C sous air pendant 15 minutes suivi d'une trempe à l'eau. Après ce traitement thermique de recuit, l'alliage Fe29.5Cr7Ni3.5Mo présente une microstructure ferritique monophasée. Ensuite, un premier échantillon a été porté à 700°C pendant 4 heures et puis à 900°C pendant 3 heures sous vide. La dureté obtenue est de 675 HV10. Un deuxième échantillon a été porté à 750°C pendant 7 heures sous vide. La dureté obtenue est de 730 HV10. La microstructure observée en microscopie optique sous lumière polarisée est représentée à la figure 6 pour le premier échantillon. On observe une fine répartition des deux phases avec en relief la phase austénitique majoritairement sous forme de lamelles et en matrice la phase sigma.

### Exemple 4

Pour évaluer la résistance à la corrosion en milieu chlorure et en particulier la résistance à la piqûration, des essais de polarisation potentiodynamique ont été réalisés sur un acier inoxydable commercial de référence qui est l'acier DIN 1.4435 et sur une nuance Fe28.5Cr7Ni4Mo selon l'invention soumise à un traitement thermique de durcissement à trois températures distinctes de respectivement 750, 800 et 850°C pendant 6 heures sous vide. Au préalable, les aciers ont été traités thermiquement à 1300°C pendant 2 heures sous argon puis refroidis par trempe au gaz pour obtenir une structure 100% ferritique à température ambiante. Après le traitement thermique à 750, 800 ou 850°C, les alliages présentent une structure biphasée austénite + phase sigma. Les mesures de polarisation potentiodynamique ont été réalisées dans une cellule électrochimique comprenant une électrode de référence au calomel saturée en chlorure de potassium et une contre électrode en platine. L'échantillon à analyser, c.à.d. l'électrode de travail, est sous forme d'une rondelle de 8 mm de diamètre polie miroir. Les essais de polarisation potentiodynamique permettent d'évaluer la résistance à la corrosion en milieu chlorure en comparant les potentiels de piqûration. Ces derniers correspondent aux potentiels pour lesquels une augmentation rapide du courant est mesurée suite à la rupture locale du film passif et à la corrosion par piqûration. Pour les essais, le potentiel de piqûration est défini comme le potentiel correspondant à un courant de 0.25 mA. Tout d'abord, une solution de NaCl 1M est préparée, introduite dans la cellule et puis purgée avec de l'azote pendant 1 heure. Ensuite, le potentiel libre Voc de l'électrode de travail est enregistré pendant 10 minutes. Le potentiel depuis la dernière valeur du potentiel libre est ensuite augmenté avec une vitesse de 0.5 mV/s jusqu'au courant mesuré de 0.25 mA, puis le potentiel est diminué avec une vitesse de 2mV/s jusqu'à un courant mesuré de 0.01 mA. Les résultats sont présentés à la figure 7. On voit clairement que le potentiel de piqûration augmente avec l'augmentation de la température de traitement thermique avec des valeurs de 0.32, 0.38 et 0.46 V vs SCE pour respectivement le traitement thermique à 750, 800 ou 850°C et de 0.24 V vs SCE pour l'acier inoxydable austénitique de référence. De plus, la repassivation dans la phase de réduction du potentiel est facilitée lorsque la température de traitement thermique est élevée. Cela illustre l'intérêt d'augmenter la teneur en Mo pour augmenter la température de traitement thermique et par là-même la résistance à la corrosion.

## Revendications

1. Acier inoxydable paramagnétique avec une composition chimique comprenant en poids :
- 20 ≤ Cr ≤ 40%,
- 3 ≤ Ni ≤ 20%,
- 0 ≤ Mn ≤ 15%,
- 0 ≤ Al ≤ 5%,
- 3 < Mo ≤ 15%,
- 0 ≤ W ≤ 5%,
- 0 ≤ Cu ≤ 2%,
- 0 ≤ Si≤ 5%,
- 0 ≤ Ti ≤ 1%,
- 0 ≤ Nb ≤ 1%,
- 0 ≤ C ≤ 0.1%,
- 0 ≤ N ≤ 0.5%,
- 0 ≤ S ≤ 0.5%,
- 0 ≤ P ≤ 0.1%,
le solde étant constitué par du fer et des impuretés éventuelles ayant chacune une teneur inférieure ou égale à 0.5%,
ledit acier ayant une dureté comprise entre 575 et 900 HV10.

2. Acier selon la revendication 1, avec une composition chimique comprenant en poids :
- 25 ≤ Cr ≤ 35%,
- 5 ≤ Ni ≤ 10%,
- 0 ≤ Mn ≤ 3%,
- 0 ≤ AL ≤ 3%,
- 3 < Mo ≤ 10%,
- 0 ≤ W ≤ 5%,
- 0 ≤ Cu ≤ 2%,
- 0 ≤ Si≤ 3%,
- 0 ≤ Ti ≤ 1%,
- 0 ≤ Nb ≤ 1%,
- 0 ≤ C ≤ 0.1%,
- 0 ≤ N ≤ 0.5%,
- 0 ≤ S ≤ 0.5%,
- 0 ≤ P ≤ 0.1%.

3. Acier selon l'une des revendications précédentes, **caractérisé en ce que** Mo est supérieur ou égal à 3.5%.

4. Acier selon l'une des revendications précédentes, **caractérisé en ce que** Mo est compris entre 3.5% et 6%.

5. Acier selon l'une des revendications précédentes, **caractérisé en ce que** Mo est compris entre 4% et 6%.

6. Acier selon l'une des revendications précédentes, **caractérisé en ce que** W est supérieur ou égal à 0.2%.

7. Acier selon l'une des revendications précédentes, **caractérisé en ce que** W est supérieur ou égal à 0.5%.

8. Acier selon l'une des revendications précédentes, **caractérisé en ce que** la dureté est comprise entre 650 et 900 HV10.

9. Acier selon l'une des revendications précédentes, **caractérisé en ce que** la dureté est comprise entre 675 et 900 HV10.

10. Acier selon l'une des revendications précédentes, **caractérisé en ce qu'**il a une microstructure formée d'une phase sigma dans un pourcentage massique compris entre 40 et 80% et d'une phase austénitique dans un pourcentage massique compris entre 20 et 60%.

11. Acier selon la revendication précédente, **caractérisé en ce que** la phase austénitique est constituée d'austénite dite primaire et d'austénite dite secondaire provenant de la transformation d'un alliage possédant une structure comprenant de la ferrite et de l'austénite.

12. Acier selon la revendication 10, **caractérisé en ce que** la phase austénitique est constituée d'austénite dite secondaire, ladite austénite secondaire provenant de la transformation d'un alliage possédant une structure 100% ferritique.

13. Acier selon l'une des revendications précédentes, **caractérisé en ce que** la phase austénitique a une taille inférieure à 10 µm, ladite taille correspondant à la plus petite dimension de la phase dans une vue en coupe.

14. Acier selon la revendication précédente, caractérisé en que la phase austénitique a une taille inférieure à 5 µm.

15. Pièce réalisée dans l'acier selon l'une des revendications précédentes.

16. Pièce selon la revendication 15, **caractérisée en ce qu'**il s'agit d'un composant horloger d'habillage ou du mouvement.

17. Montre comprenant le composant horloger selon la revendication précédente.

18. Procédé de fabrication d'une pièce en acier inoxydable paramagnétique, **caractérisé en ce qu'**il comporte les étapes successives suivantes :
a) Mise à disposition ou réalisation d'une ébauche ayant sensiblement la forme de la pièce à fabriquer ou étant de forme différente, l'ébauche ayant une composition chimique selon l'une des revendications 1 à 7 et possédant une structure majoritairement ou complètement ferritique,
b) Mise en forme de l'ébauche si ladite ébauche de l'étape a) présente une forme différente de la pièce à fabriquer,
c) Traitement thermique, dit traitement de durcissement, de l'ébauche pour obtenir la pièce, le traitement de durcissement étant réalisé en un ou plusieurs paliers à une température comprise entre 600 et 1000°C pendant un temps total compris entre 30 minutes et 24 heures pour transformer la ferrite de ladite structure en une phase austénitique et une phase intermétallique sigma, le traitement de durcissement étant suivi d'un refroidissement jusqu'à température ambiante.

19. Procédé de fabrication selon revendication 18, **caractérisé en ce que** la structure majoritairement ou complètement ferritique de l'ébauche à l'étape a) a été réalisée en effectuant un traitement thermique ou thermomécanique sur une matière de base à une température comprise entre 1000 et 1500°C pendant un temps compris entre 1 minute et 24 heures, le traitement thermique ou thermomécanique étant suivi d'une trempe jusqu'à une température inférieure à 500°C pour conserver la structure ferritique à température ambiante.

20. Procédé de fabrication selon la revendication 18 ou 19, **caractérisé en ce que** le traitement thermique de l'étape c) est réalisé en deux paliers avec un premier palier entre 600°C et 850°C et un deuxième palier entre 850 et 1000°C.

21. Procédé de fabrication selon la revendication 19 ou 20, **caractérisé en ce que** la matière de base est sous forme d'une poudre ou d'un matériau consolidé.

22. Procédé de fabrication selon l'une des revendications 19 à 21, **caractérisé en ce que** la matière de base a été obtenue par coulée, par pressage, par moulage par injection, par fabrication additive ou par métallurgie des poudres.

23. Procédé de fabrication selon la revendication précédente, **caractérisé en ce que** l'ébauche de l'étape a) est réalisée par fabrication additive avec laser.

24. Procédé de fabrication selon l'une des revendications 18 à 23, **caractérisé en ce que** la structure de l'ébauche à l'étape a) comporte une fraction massique d'austénite inférieure ou égale à 40% et une fraction massique de ferrite supérieure ou égale à 60%.

25. Procédé de fabrication selon l'une des revendications 18 à 24, **caractérisé en ce que** la structure de l'ébauche à l'étape a) comporte 100% de ferrite.

26. Procédé de fabrication selon l'une des revendications 18 à 25, **caractérisé en ce que**, à l'issue de l'étape a), l'ébauche a une dureté comprise entre 150 et 400 HV10.

27. Procédé de fabrication selon l'une des revendications 18 à 26, **caractérisé en ce que** l'étape b) de mise en forme comporte une ou plusieurs séquences de déformation plastique à une température inférieure à 650°C.

28. Procédé de fabrication selon l'une des revendications 18 à 27, **caractérisé en ce que** l'étape b) de mise en forme est réalisée par forgeage, découpage ou usinage.

29. Procédé de fabrication selon la revendication 19, **caractérisé en ce que** le traitement thermique ou thermomécanique est réalisé en plusieurs cycles.

30. Procédé de fabrication selon la revendication 24, **caractérisé en ce que**, lorsque la structure de l'ébauche comporte de l'austénite, le procédé comporte, avant l'étape c), une étape b') de traitement thermique ou thermomécanique sur l'ébauche à une température comprise entre 1000°C et 1500°C pendant un temps compris entre 1 minute et 24 heures pour obtenir une structure complètement ferritique, le traitement thermique ou thermomécanique étant suivi d'une trempe jusqu'à une température inférieure à 500°C pour conserver la structure complètement ferritique à température ambiante.
